# EUROPÄISCHE PATENTSCHRIFT

(11) **EP 0 969 998 B1**
(45) Veröffentlichungstag und Bekanntmachung des Hinweises auf die Patenterteilung: **18.12.2002**
(21) Anmeldenummer: 98913686.6
(22) Anmeldetag: 07.03.1998
(51) Int. Cl.: B62D 1/12, G05G 1/28

(54) **KRAFTFAHRZEUG MIT ZUMINDEST EINEM ÜBER WENIGSTENS EINEN BEDIENHEBEL STEUERBAREN TEIL**
MOTOR VEHICLE WITH AT LEAST ONE PART WHICH CAN BE CONTROLLED BY AT LEAST ONE OPERATING LEVER
AUTOMOBILE COMPORTANT AU MOINS UNE PARTIE POUVANT ETRE PILOTEE PAR L'INTERMEDIAIRE D'AU MOINS UN LEVIER DE COMMANDE

(30) Priorität: 29.03.1997 DE 19713245
(43) Veröffentlichungstag der Anmeldung: 12.01.2000
(73) Patentinhaber: Mercedes-Benz Lenkungen GmbH, 40476 Düsseldorf (DE)
(72) Erfinder: BREUNING, Edwin, D-73770 Denkendorf (DE); RACHEL, Rüdiger, D-73734 Esslingen (DE)
(74) Vertreter: LENZING GERBER
(86) Internationale Anmeldenummer: EP9801344
(87) Internationale Veröffentlichungsnummer: WO98043863

(56) Entgegenhaltungen:
- EP-A- 0 493 795
- BOLTE, UWE: "Das Aktive Stellteil - ein ergonomisches Bedienkonzept, In: Fortschritt Berichte BDE, Reihe 17: Biotechnik, Nr. 75" 1991 , VDI-VERLAG , DÜSSELDORF, DE XP002071251 siehe Seite 37, Zeile 1 - letzte Zeile; Abbildung
- "UNE SAAB SANS VOLANT!" INGENIEURS DE L'AUTOMOBILE, Nr. 671, 1.März 1992, COURBEVOIE, FA, Seiten 22-24, XP000267951

## Beschreibung

Kraftfahrzeuge moderner Bauart weisen als Bedienelemente üblicherweise ein Lenkrad sowie diverse Pedale, so insbesondere Brems- und Gaspedal auf. Diese Bedienelemente sind durch ihre Kupplung mit den über sie angesteuerten Teilen auch geeignet, Rückmeldungen über die Stellage des jeweiligen Teiles bzw. den Fahrzustand des Fahrzeuges zu geben. Vor allem gilt dies für das Lenkrad, da es für die Lenkung keinen inaktiven Zustand gibt und zwischen Lenkrad und Radstellung eine unmittelbare, spürbare Wechselbeziehung besteht.

Gerade das Lenkrad ist im Fahrzeug, so insbesondere bei Personenkraftwagen, aber häufig auch ein störendes Element, nicht nur wegen seines erheblichen Raumbedarfes, sondern auch wegen seiner handhabungsbedingt gegebenen Positionierung vor dem Fahrer als Bedienperson.

Es hat deshalb nicht an Versuchen gefehlt, auch für Kraftfahrzeuge eine Lenkung über Bedienhebel in Form sogenannter Side-sticks zu realisieren, quasi in Analogie zum Flugzeugbau. Die Bedienverhältnisse sind insoweit keineswegs unmittelbar vergleichbar, und zwar sowohl räumlich wie auch wegen der bei Fluggeräten hinsichtlich der Bedienung weit höheren Orientierung an Instrumenten. Zudem wird das Lenkrad in Kraftfahrzeugen oft genug auch als stützende Ablage für die Hände, als Ausstieghilfe oder dergleichen benutzt, was in Verbindung mit der Betätigung von Teilen über Bedienhebel jedenfalls dann besondere Schwierigkeiten bedingt, wenn keine zwangsweise Kopplung zwischen Bedienhebel und zu steuemdem Teil gegeben ist, die eine unmittelbare Zuordnung der jeweiligen Stellungen, wie sie bei mechanischen Verbin-dungen des Lenkrades mit den Rädern gegeben ist, zur Folge hat und damit Rückschlüsse aus der Stellung des Bedienhebels auf die Stellung des zu steuernden Teiles möglich macht.

Das Dokument "Fortschritt Berichte BDE, Reihe 17: Biotechnik, Nr. 75" offenbart die Verwendung von aktiven Stellteilen in Kraftfahrzeugen. Z. B. ist auf Seite 37 eine Vorrichtung mit einem Bedienhebel gezeigt, bei dem die Steuerbefehle bedienhebelseitig kraftabhängig und sensorisch erfaßt eingebbar sind und der Bedienhebel in Rückkopplung zu dem über den Steuerbefehl angesprochenen und entsprechend dem Steuerbefehl verstellbaren Teil in einer jeweiligen Einstellage desselben korrespondierenden Stellung über Steuermittel angesteuert dadurch einstellbar ist, daß ein entsprechend der Einstellage des Teiles über die Steuermittel angesteuerter Stellmotor den Bedienhebel antreibt. Wenn eine solche Vorrichtung in einem Kraftfahrzeug verwendet wird, tritt das Problem auf, daß auf den Bedienhebel auch Kräfte ausgeübt werden, die nicht der Auslösung von Steuerbefehlen dienen.

Die Erfindung betrifft Bedienhebelbetätigungen für Kraftfahrzeuge, insbesondere für die gelenkten Räder von Kraftfahrzeugen, bei denen eine solche zwangsweise Kopplung des Bedienhebels mit dem zu steuernden Teil, und damit eine Zuordnung der Stellungen auf mechanischem oder hydraulischem Wege nicht gegeben ist, was beispielsweise bei sogenannten Steer-by-wire-Lenkungen der Fall ist, also Lenkungen, bei denen die Steuerbefehle auf elektrischem Weg zwischen einem Bedienelement, also einem Bedienhebel oder einem Lenkrad und dem entsprechenden, zu lenkenden Rad übertragen werden. In Bezug auf solche Bedienhebelbetätigungen, bei denen der Bedienhebel in seiner Bewegung quasi unabhängig vom jeweils zu steuernden Teil ist, hat es sich die Erfindung zur Aufgabe gemacht, eine Rückkopplung sicherzustellen, bei der die Stellung des Bedienhebels zur Stellung des jeweils steuerbaren oder zu verstellenden Teil korrespondiert, und zwar ungeachtet etwaiger auf den Bedienhebel ausgeübter Kräfte, die mit der eigentlichen Bedienfunktion nichts zu tun haben.

Dies wird durch die Merkmale des Anspruches 1 erreicht, bei dem die Steuerbefehle über eine dem Bedienhebel zugehörige Sensorik erfaßt werden, die bezüglich der Betätigung und/oder Anordnung so gelegt und/oder gestaltet ist, daß die zur Steuerung auf die Sensorik ausgeübten Kräfte gezielt angesetzt werden müssen und nicht, jedenfalls im Regelfall, durch Kräfte bedingt sein können, die aus anderen Gründen auf den Bedienhebel ausgeübt werden, sei es zur Abstützung oder zu sonstigen Zwecken. Dementsprechend ist der Bedienhebel nur im Wege der Rückkopplung aus seiner Grundstellung und in Anpassung an die Lage des jeweils angesteuerten Teiles verstellbar, wobei der diese Verstellung bewirkende Stellmotor über ein Getriebe mit dem Bedienhebel verbunden ist, das nicht nur die notwendige, feinstufige und in Anbetracht des geringen Verstellweges eines Bedienhebels auch feinfühlige Verstellung sicherstellt, sondern auch ein ausreichend großes Haltemoment gewährleistet, um in Verbindung mit der Haltekraft des Motores Bewegungen des Bedienhebels in Folge von nicht durch die Rückkopplung bedingten Kräften auszuschließen. Als ein hierfür geeignetes und erfindungsgemäß einzusetzendes Getriebe ist ein Getriebe, insbesondere ein Harmonic-Drive-Getriebe vorgesehen, das entsprechend hohe Übersetzungsverhältnisse ermöglicht und in Verbindung damit in Gegenrichtung auch entsprechend hohe Haltemomente, bei Antrieb durch einen handelsüblichen, kleinbauenden und schnellaufenden Elektromotor mit vergleichsweise geringer Antriebsleistung.

Eine Bedieneinheit dieses Aufbaus zeichnet sich zudem durch sehr geringen Raumbedarf aus, wie dies bei den beengten Platzverhältnissen in Kraftfahrzeugen von wesentlicher Bedeutung ist, und sie bildet zweckmäßigerweise auch eine Montageeinheit, bei der ein dem Stellmotor in Rückkopplung zu einem dem verstellbaren Teil zugeordneten Stellungsgeber ansteuerndes Steuergerät und gegebenenfalls eine zusätzliche Bremse koaxial angeordnet werden können.

Eine solche Bedieneinheit ist insbesondere bei den sogenannten, bereits angesprochenen Steer-by-wire-Lenkungen in Kraftfahrzeugen vorteilhaft, zumal für den Gesamtaufbau auf handelsübliche Elemente zurückgegriffen werden kann, die eine hohe Bediensicherheit gewährleisten, und die wegen des erreichten, kleinen Bauvolumens gegebenenfalls auch redundant eingesetzt werden können.

Die Erfindung wird im folgenden anhand eines Ausführungsbeispieles näher erläutert.
Es zeigen:
- Fig. 1: Eine schematisierte Gesamtdarstellung eines Bedienhebels in Form eines Side-sticks mit Stetleinrichtung, und
- Fig. 2: ein in der Stelleinrichtung verwendetes und ausgangsseitig mit dem Sidestick verkoppeltes Getriebe.

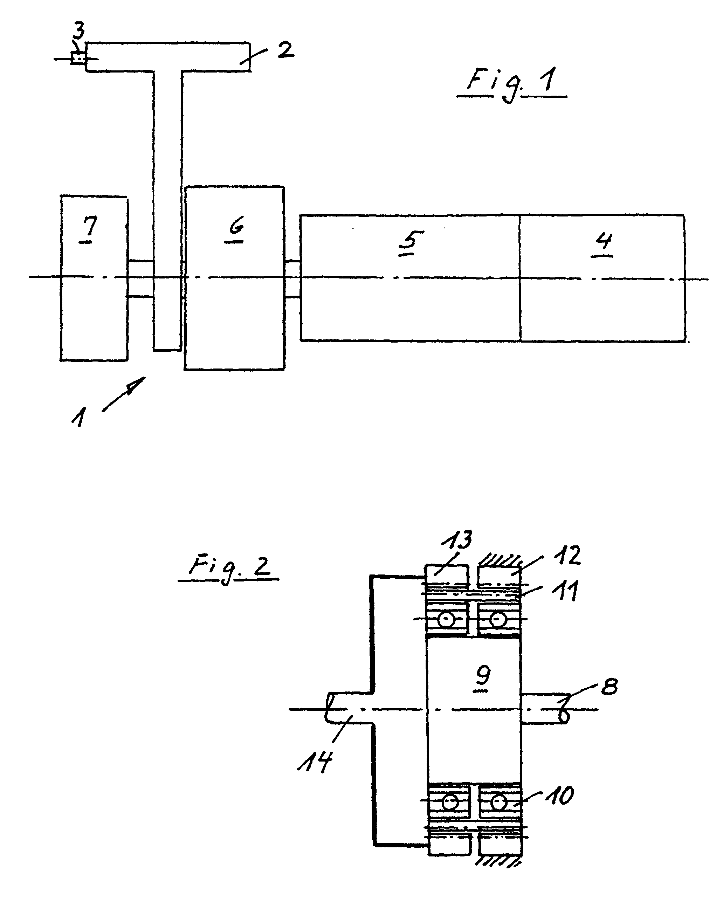

In der schematisierten Gesamtdarstellung gemäß Figur 1 ist eine insgesamt mit 1 bezeichnete Stelleinrichtung gezeigt, über die der Bedienhebel 2 in Form eines Side-sticks in Rückkopplung auf ein verstellbares, hier nicht gezeigtes Teil, zum Beispiel die Räder einer lenkbaren Achse eines Kraftfahrzeuges, entsprechend der Einstellage dieser Räder aus einer Grund- oder Normalstellung, die bei lenkbaren Rädern der Geradeausfahrtrichtung entsprechen würde, verstellt wird, so daß die jeweilige Bedienperson über die Lage des Side-stick 2 quasi die Einstellage der Räder, also den Radeinschlag erfassen kann. Die Steuerbefehle für das jeweils einzustellende Teil, im Falle von lenkbaren Rädern als einstellbarem Teil also die Steuerbefehle für den jeweiligen Lenkeinschlag, werden dabei bevorzugt bedienhebelseitig kraftabhängig und sensorisch erfaßt über einen am Bedienhebel 2 vorgesehenen Steuerschieber 3 gegeben, und in nicht weiter dargestellter Weise als Lenkbefehle einer den Rädern zugeordneten Stellvorrichtung zugeleitet, über die die Räder entsprechend eingeschlagen werden. Der jeweilige Einschlagwinkel wird wiederum erfaßt, und die entsprechenden Signale werden einem Sollwertgeber zugeleitet, der hier mit 4 bezeichnet ist und der als Inkrementalgeber oder bevorzugt als Resolver ausgebildet ist. Über diesen Sollwertgeber 4 als Steuermittel wird der Stellmotor 5 angesteuert, von dem über ein Getriebe 6 der als Side-stick ausgebildete Bedienhebel 2 entsprechend der Einstellage des jeweiligen Rades in Rückkopplung zu dieser verstellt wird.

Um zu einer kleinbauenden Stelleinrichtung zu kommen, findet als Stellmotor 5 bevorzugt ein Elektromotor Verwendung, der relativ hoch dreht, worunter hier insbesondere Drehzahlen im Bereich von mehr als 1500 U/min verstanden werden.

Entsprechend der hohen Motordrehzahl muß das Getriebe 6 ein großes Untersetzungsverhältnis aufweisen, worunter hier ein Untersetzungsverhältnis von mindestens 50 : 1 verstanden wird. Über die Ausgangswelle des Getriebes wird der Bedienhebel 2 verstellt, wobei die Ausgangswelle des Getriebes gleichzeitig die Tragachse für den Bedienhebel 2 bilden kann.

Da auf den Bedienhebel 2 insbesondere bei der Anwendung in Kraftfahrzeugen auch Kräfte ausgeübt werden oder werden können, die nicht der Auslösung von Steuerbefehlen dienen und da über solche Kräfte auch die über die Rückkopplung zum jeweils einzustellenden Teil, also beispielsweise zu den Rädern eingestellte Lage des Bedienhebels nicht verändert werden können soll, müssen über das Getriebe 6 und die Haltekraft des Motores 5 verhältnismäßig große Haltemomente aufgebracht werden. Dieses ist bei entsprechender Auslegung und Wahl des Getriebes 6 und des Stellmotores 5 in weiten Grenzen möglich. Um darüber hinausgehende Extrembetastungen, zum Beispiel durch unbeabsichtigte Abstützung auf dem Bedienhebel 2 im Falle einer Notbremsung bei Kraftfahrzeugen, absichern zu können, ist im Rahmen der Erfindung zusätzlich eine Bremse 7 vorgesehen, die direkt oder über die Getriebeabtriebswelle mit dem Bedienhebel 2 zusammenwirkt. Die ortsfeste Bremse 7 kann dabei dem Getriebe 6 in Bezug auf den Bedienhebel 2 gegenüberliegend angeordnet werden oder aber, was hier nicht gezeigt ist, auch zwischen Getriebe 6 und Stellmotor 5 eingebaut sein.

Bei der erfindungsgemäßen Stelleinrichtung sind der Sollwertgeber 4, der Stellmotor 5, das Getriebe 6, der Bedienhebel 2 und die Bremse 7 koaxial angeordnet und bilden eine kleinbauende Einheit, die aus weitgehend handelsüblichen Bauelementen zusammengesetzt werden kann. Die kleine Baugröße der dem Bedienhebel 2 zugeordneten Elemente der Stelleinrichtung 1 ermöglicht es dabei auch, diese gegebenenfalls redundant anzuordnen, in der einfachsten Form durch spiegelbildliche Anordnung zum Bedienhebel 2, so daß ein sehr hoher Sicherheitsgrad erreicht werden kann, wobei die vorgeschilderte Redundanz auch dahingehend ausgenutzt werden kann, die dem Bedienhebel 2 in Redundanz zugeordneten Stellelemente so auszulegen, daß sie im Regelfall gemeinsam arbeiten und bei Ausfall der einen Einheit die andere Einheit eine Notfunktion bei entsprechend vermindertem Leistungsvermögen übernimmt.

Als Getriebe 6, die besonders klein bauen und sehr hohe Untersetzungsverhältnisse ermöglichen, und die damit für den erfindungsgemäßen Einsatzzweck im besonderen Maße geeignet sind, kommen Harmonic-Drive-Getriebe insbesondere in Betracht, es sind aber auch Cyclo-Getriebe einsetzbar.

Figur 2 veranschaulicht sehr schematisiert einen Querschnitt durch ein Harmonic-Drive-Getriebe, wobei dieses insgesamt wieder mit 6 bezeichnete Getriebe eine Eingangswelle 8 aufweist, über die eine elliptische Exzenterscheibe 9 angetrieben wird. Auf dieser ist über ein Lager 10 drehbar eine elastische, außenverzahnte Buchse 11 abgestützt, wobei die Abstützung im Bereich der langen Ellipsenachse erfolgt und wobei diese lange Ellipsenachse derart bemessen ist, daß die außenverzahnte, elastische Buchse 11 im jeweiligen Abstützbereich mit der Innenverzahnung von Hohträdern 12, 13 in Eingriff steht. Hierbei ist die Zähnezahl der außenverzahnten, elastischen Buchse 11 kleiner als die Zähnezahl der Hohlräder 12, 13. Bei n-Zähnen der elastischen Buchse 11 weisen die Hohlräder 12, 13 n + 2 - Zähne auf. Von den Hohlrädern ist das Hohlrad 12 gehäusefest, also nicht drehbar, während das abtriebsseitig daneben liegende Hohlrad 13 im Gehäuse drehbar gelagert ist und mit der Abtriebswelle verbunden ist. Die Abtriebswelle ist mit 14 bezeichnet.

## Patentansprüche

1. Kraftfahrzeug mit zumindest einem über wenigstens einen Bedienhebel (2) in Form eines sogenannten Side-stick-steuerbaren Teil, bei dem die Steuerbefehle bedienhebelseitig kraftabhängig und sensorisch erfaßt eingebbar sind und der Bedienhebel (2) in Rückkopplung zu dem über den Steuerbefehl angesprochenen und entsprechend dem Steuerbefehl verstellbaren Teil in einer zur jeweiligen Einstellage desselben korrespondierenden Stellung über Steuermittel (4) angesteuert dadurch einstellbar ist, daß ein entsprechend der Einstellage des Teiles über die Steuermittel angesteuerter Stellmotor (5) den Bedienhebel (2) (6) antreibt, **dadurch gekennzeichnet, daß** der Stellmotor den Bedienhebel (2) über ein Verstellgetriebe (6) antreibt, das als planetenartiges Getriebe mit großer Übersetzung, insbesondere in Form eines Harmonic-Drive-Getriebes ausgebildet ist.

2. Kraftfahrzeug nach Anspruch 1,
**dadurch gekennzeichnet, daß** zur Ansteuerung des Stellmotores (5) entsprechend der Einstellung des verstellbaren Teiles vorgesehene Steuermittel durch einen Sollwertgeber (4) gebildet sind.

3. Kraftfahrzeug nach Anspruch 2,
**dadurch gekennzeichnet, daß** der Sollwertgeber (4) als Inkrementalgeber ausgebildet ist.

4. Kraftfahrzeug nach Anspruch 2,
**dadurch gekennzeichnet, daß** der Sollwertgeber 4) als Resolver ausgebildet ist.

5. Kraftfahrzeug nach einem der vorhergehenden Ansprüche,
**dadurch gekennzeichnet, daß** Getriebe (6), Stellmotor (5) und Sollwertgeber (4) achsgleich angeordnet sind.

6. Kraftfahrzeug nach Anspruch 5,
**dadurch gekennzeichnet, daß** das eingangsseitig mit dem Stellmotor (5) verbundene Getriebe (6) ausgangsseitig mit dem Bedienhebel (2) verbunden ist.

7. Kraftfahrzeug nach Anspruch 6,
**dadurch gekennzeichnet, daß** der Bedienhebel (2) auf der Ausgangswelle des Getriebes (6) angeordnet ist.

8. Kraftfahrzeug nach einem der vorhergehenden Ansprüche,
**dadurch gekennzeichnet, daß** achsgleich zum Getriebe (6) eine Bremse (7) angeordnet ist.

9. Kraftfahrzeug nach Anspruch 8,
**dadurch gekennzeichnet, daß** die Bremse (7) zwischen Getriebe und Stellmotor angeordnet ist.

10. Kraftfahrzeug nach Anspruch 8.
**dadurch gekennzeichnet, daß** die Bremse (7) auf der dem Getriebe (6) gegenüberliegenen Seite des Bedienhebels (2) angeordnet ist.

11. Kraftfahrzeug nach einem der vorhergehenden Ansprüche,
**dadurch gekennzeichnet, daß** das Getriebe (6) in bekannter Weise eine mit der Eingangswelle (8) verbundene elliptische Exzenterscheibe (9), eine darauf im Bereich der langen Achse der Exzenterscheibe (9) über Lager (10) drehbar abgestützte elastische, außen verzahnte Buchse (11) sowie innen verzahnte Hohlräder (12, 13) aufweist, deren eines gehäusefest ist und deren anderes den Abtrieb bildet.

12. Kraftfahrzeug nach einem der vorhergehenden Ansprüche,
**dadurch gekennzeichnet, daß** als steuerbares Teil die lenkbaren Räder zumindest einer Achse eines Kraftfahrzeuges vorgesehen sind.

## Claims

1. Motor vehicle with at least one component controllable via at least one operating lever (2) in the form of a side stick, where the control commands on the operating lever side can be given force-dependent and detected by sensor, and where in feedback to the component addressed via the control command and adjustable in accordance with the control command, the operating lever (2) can be set driven via control means (set-point adjuster 4) in a position corresponding to the relevant set position of said component such that a servomotor (5) driven via the control means according to the set position of the component drives the operating lever (2), **characterised in that** the servomotor drives the operating lever (2) via an adjustment gear (6) which is formed as a planet gear with large translation ratio in particular in the form of a harmonic drive gear.

2. Motor vehicle according to claim 1, **characterised in that** the control means provided to drive the servomotor (5) according to the setting of the adjustable component are formed by a set-point adjuster (4).

3. Motor vehicle according to claim 2, **characterised in that** the set-point adjuster (4) is formed as an incremental emitter.

4. Motor vehicle according to claim 2, **characterised in that** the set-point adjuster (4) is formed as a resolver.

5. Motor vehicle according to any of the previous claims, **characterised in that** the gears (6), servomotor (5) and set-point adjuster (4) are arranged coaxially.

6. Motor vehicle according to claim 5, **characterised in that** the gear (6) connected with the servomotor (5) on the input side is connected on the output side with the operating lever (2).

7. Motor vehicle according to claim 6, **characterised in that** the operating lever (2) is arranged on the output shaft of the gear (6).

8. Motor vehicle according to any of the previous claims, **characterised in that** a brake (7) is arranged coaxial to the gear (6).

9. Motor vehicle according to claim 8, **characterised in that** the brake (7) is arranged between the gear and the servomotor.

10. Motor vehicle according to claim 8, **characterised in that** the brake (7) is arranged on the side of the operating lever (2) opposite the gear (6).

11. Motor vehicle according to any of the previous claims, **characterised in that** the gear (6) in the known manner has an elliptical cam plate (9) connected with the input shaft (8), an elastic bush (11) with external toothing supported rotatably via bearings (10) thereon in the area of the long axis of the cam plate (9), and ring gears (12, 13) with internal toothing, one of which is housing-fixed and the other forms the power take-off.

12. Motor vehicle according to any of the previous claims, **characterised in that** as a controllable component are provided the steerable wheels on at least one axle of a motor vehicle.

## Revendications

1. Véhicule automobile comprenant au moins une partie susceptible d'être commandée via au moins un levier d'actionnement (2) sous la forme dite "manche à balai latéral", dans laquelle les ordres de commande peuvent être saisis par l'intermédiaire du levier d'actionnement en dépendance d'une force et détectés au moyen de capteurs, et le levier d'actionnement (2) est réglable avec rétroaction par rapport à la partie concernée par l'ordre de commande et mobile en correspondance dudit ordre de commande dans une position qui correspond à la position de réglage respective de ladite partie sous le pilotage d'organes de commande (4), par le fait qu'un moteur de positionnement (5), piloté par les organes de commande en fonction de la position de réglage de ladite partie, entraîne le levier d'actionnement (2), **caractérisé en ce que** le moteur de positionnement entraîne le levier d'actionnement (2) par l'intermédiaire d'une transmission de réglage (6) réalisée sous forme de transmission du type à planétaires avec forte démultiplication, en particulier sous la forme d'une transmission à entraînement harmonique.

2. Véhicule automobile selon la revendication 1, **caractérisé en ce** des organes de commande prévus pour le pilotage du moteur de positionnement (5) en correspondance du réglage de la partie mobile sont formés par un générateur de valeur de consigne (4).

3. Véhicule automobile selon la revendication 2, **caractérisé en ce que** le générateur de valeur de consigne (4) est réalisé sous forme de générateur incrémental.

4. Véhicule automobile selon la revendication 2, **caractérisé en ce que** le générateur de valeur de consigne (4) est réalisé sous la forme d'un résolveur.

5. Véhicule automobile selon l'une des revendications précédentes, **caractérisé en ce que** la transmission (6), le moteur de positionnement (5) et le générateur de valeur de consigne (4) sont agencés de manière coaxiale.

6. Véhicule automobile selon la revendication 5, **caractérisé en ce que** la transmission (6), reliée du côté entrée avec le moteur de positionnement (5), est reliée du côté sortie avec le levier d'actionnement (2).

7. Véhicule automobile selon la revendication 6, **caractérisé en ce que** le levier d'actionnement (2) est agencé sur l'arbre de sortie de la transmission (6).

8. Véhicule automobile selon l'une des revendications précédentes, **caractérisé en ce qu'**un frein (7) est agencé coaxialement à la transmission (6).

9. Véhicule automobile selon la revendication 8, **caractérisé en ce que** le frein (7) est agencé entre la transmission et le moteur de positionnement.

10. Véhicule automobile selon la revendication 8, **caractérisé en ce que** le frein (7) est agencé sur le côté du levier d'actionnement (2) opposé à la transmission (6).

11. Véhicule automobile selon l'une des revendications précédentes, **caractérisé en ce que** la transmission (6) comprend de manière connue un disque excentrique elliptique (9) relié à l'arbre d'entrée (8), une douille à denture extérieure élastique (11) supportée sur le disque excentrique dans la région du grand axe du disque excentrique (9) avec faculté de rotation par l'intermédiaire de paliers (10), ainsi que des roues creuses à denture intérieure (12, 13) dont l'une est solidaire du boîtier et dont l'autre forme l'élément mené.

12. Véhicule automobile selon l'une des revendications précédentes, **caractérisé en ce que** les roues directrices d'au moins un essieu d'un véhicule sont prévues à titre de partie susceptible d'être commandée.
